(19) Europäisches Patentamt
European Patent Office
Office européen des brevets

(11) **EP 4 289 801 A1**

(12) **EUROPEAN PATENT APPLICATION**
published in accordance with Art. 153(4) EPC

(43) Date of publication:
**13.12.2023  Bulletin 2023/50**

(21) Application number: **22749834.2**

(22) Date of filing: **04.02.2022**

(51) International Patent Classification (IPC):
**C03C 3/091** (2006.01)      **C03C 3/095** (2006.01)
**C03C 3/097** (2006.01)      **C03C 3/11** (2006.01)
**C03C 13/00** (2006.01)

(52) Cooperative Patent Classification (CPC):
**C03C 3/091; C03C 3/095; C03C 3/097; C03C 3/11;
C03C 13/00**

(86) International application number:
**PCT/JP2022/004565**

(87) International publication number:
**WO 2022/168963 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **05.02.2021  JP 2021017862**

(71) Applicant: **NIPPON SHEET GLASS COMPANY,
LIMITED
Tokyo 108-6321 (JP)**

(72) Inventors:
• **FUJIWARA Kosuke
Tokyo 108-6321 (JP)**
• **KURACHI Junji
Tokyo 108-6321 (JP)**
• **MIYAUCHI Taro
Tokyo 108-6321 (JP)**

(74) Representative: **Cabinet Beau de Loménie
158, rue de l'Université
75340 Paris Cedex 07 (FR)**

(54) **GLASS COMPOSITION AND GLASS FIBER AND METHOD FOR PRODUCING SAME**

(57)    Provided is a glass composition including the following components in mass%: $45 \leq SiO_2 \leq 80$; $10 \leq B_2O_3 \leq 40$; $0.1 \leq Al_2O_3 \leq 20$; $0.1 \leq (MgO + CaO) \leq 10$; $0 \leq (Li_2O + Na_2O + K_2O) \leq 5$; and $0.1 \leq T\text{-}SnO_2 \leq 2$, where $T\text{-}SnO_2$ represents total tin oxide calculated as $SnO_2$, wherein $0 \leq MgO/(MgO + CaO) \leq 0.50$ is satisfied on a mass basis. This glass composition is suitable for stably manufacturing a low-permittivity glass fiber.

EP 4 289 801 A1

**Description**

TECHNICAL FIELD

The present invention relates to a glass composition, a glass fiber formed of the composition, and a glass fiber manufacturing method.

BACKGROUND ART

Resin compositions are widely included as electrically insulating members and mechanical members in various parts of electronic devices. Examples of the electrically insulating members include connector housings used for surface-mount technology (SMT), flexible printed circuits (FPCs), board-to-board, central processing unit (CPU) sockets, memory cards, edge connectors, optical connectors, and the like, reactance bobbins used for liquid crystal display (LCD) backlights, coils, flats, transformers, magnetic heads, and the like, switches used for relay cases, relay base switches, reflow DIP switches, tact switches, and the like, sensor cases, capacitor casings, volume casings, and trimmer casings. Examples of the mechanical members include lens holders and pickup bases for optical pickups, insulators and terminals for micromotors, and drums for laser printers. Resin compositions are also included in films such as base films for FPCs and base films for copper clad laminates. Some printed circuit boards mounted in electronic devices also include boards formed of resin compositions. Some printed wiring boards having no electronic parts installed yet also include boards formed of resin compositions. Hereinafter, in the present specification, printed circuit boards and printed wiring boards are collectively referred to as "printed boards".

A resin composition as described above includes a thermoplastic resin and a glass fiber, and further includes a curing agent, a modifying agent, or the like, if necessary. Printed boards can further includes an inorganic filler in some cases. A glass filler is sometimes used as the inorganic filler. In recent years, to meet the demand for reducing the size of electronic devices and the demand for reducing the thickness of electronic devices and thereby achieving high performance, a reduction in permittivity is desired of resin compositions and, accordingly, of materials forming the resin compositions. Patent Literature 1 discloses a glass fiber formed of a low-permittivity glass composition.

CITATION LIST

Patent Literature

Patent Literature 1: JP S62-226839 A

SUMMARY OF INVENTION

Technical Problem

Glass compositions are required to have properties suitable for mass production. For example, a long glass fiber can be obtained by spinning a raw glass molten in a refractory tank furnace. In this glass fiber manufacturing method, breakage of a glass fiber is likely to happen due to bubbles in a raw glass. In particular, in the case of a low-permittivity glass composition, which has a relatively high viscosity, bubbles occurring during melting of glass raw materials are likely to be left in the resulting raw glass. The technique for manufacturing a glass fiber formed of a low-permittivity glass composition has room for improvement.

An object of the present invention is to provide a glass composition from which a low-permittivity glass fiber can be stably manufactured.

Solution to Problem

The present inventor has revealed that such a glass composition can be obtained by employing tin oxide as a refining agent and defining the range of the T-$SnO_2$ content (T-$SnO_2$ represents total tin oxide calculated as $SnO_2$).

A glass composition of the present invention includes the following components, in mass%:

$45 \leq SiO_2 \leq 80$;
$10 \leq B_2O_3 \leq 40$;
$0.1 \leq Al_2O_3 \leq 20$;
$0.1 \leq (MgO + CaO) \leq 10$;
$0 \leq (Li_2O + Na_2O + K_2O) \leq 5$; and

$0.1 \leq T\text{-}SnO_2 \leq 2$, where $T\text{-}SnO_2$ represents total tin oxide calculated as $SnO_2$, wherein
$0 \leq MgO/(MgO + CaO) \leq 0.50$ is satisfied on a mass basis.

A glass fiber of the present invention is a glass fiber formed of the above glass composition.

A glass fiber manufacturing method of the present invention is a glass fiber manufacturing method including:

melting the glass composition of the present invention; and
shaping the molten glass composition into a glass fiber.

Advantageous Effects of Invention

According to the present invention, a glass composition from which a low-permittivity glass fiber can be stably manufactured is able to be obtained. Moreover, a glass composition that emits light by ultraviolet irradiation thereof can be obtained. Light emission by ultraviolet irradiation is useful when the glass composition is used as pigments, materials for sensors, materials for lights, materials for architecture, and the like.

DESCRIPTION OF EMBODIMENTS

Embodiments of the present invention will be described hereinafter. The following description is not intended to limit the present invention to particular embodiments. Hereinafter, being "substantially free of" a component means that the content of the component is less than 0.1 mass%, preferably less than 0.05 mass%, more preferably less than 0.01 mass%, even more preferably less than 0.005 mass%, particularly preferably less than 0.003 mass%, and most preferably less than 0.001 mass%. The phrase "consisting essentially of" a component is intended to mean that other components, such as impurities inevitably introduced from, for example, an industrial raw material and a manufacturing apparatus, than the described component may be contained as far as the content of the other components is so small that a composition can be considered "substantially free of" the other components. Preferable ranges of the contents of components, properties, and so on can be determined by arbitrarily combining the upper and lower limits specified below individually.

[Glass composition]

<Composition of glass>

$(SiO_2)$

Silicon dioxide ($SiO_2$) is a component that forms a glass network and is a main component (a component whose content is highest) of the glass composition. Moreover, $SiO_2$ is a component that adjusts the devitrification temperature and the viscosity during glass forming, and is a component having a permittivity-lowering effect. When the $SiO_2$ content is 45 mass% or more and 80 mass% or less, not only an increase in the devitrification temperature of the glass is reduced, but a melting point of the glass is avoided to become excessively high, and thus more uniform melting of raw materials can be achieved. The lower limit of the $SiO_2$ content is preferably 48 mass% or more, more preferably 50 mass% or more, and may be 51 mass% or more, 52 mass% or more, 53 mass% or more, 54 mass% or more, or even 55 mass% or more. The upper limit of the $SiO_2$ content is preferably 75 mass% or less, more preferably 70 mass% or less, even more preferably 65 mass% or less, particularly preferably 60 mass% or less, and most preferably 58 mass% or less. The $SiO_2$ content may be 48 mass% or more and 55 mass% or less.

$(B_2O_3)$

Diboron trioxide ($B_2O_3$) is a component that forms the glass network. Moreover, $B_2O_3$ is also a component that adjusts the devitrification temperature and the viscosity during glass forming, and is a component having a permittivity-lowering effect. At the same time, $B_2O_3$ is prone to evaporation during melting of the glass composition; an excessively high $B_2O_3$ content makes it difficult for the glass composition to attain sufficient homogeneity. Additionally, excessive inclusion of $B_2O_3$ decreases the water resistance of the glass. When the $B_2O_3$ content is 10 mass% or more and 40 mass% or less, not only an increase in the devitrification temperature of the glass is reduced, but a melting point of the glass is avoided to become excessively high, and thus, more uniform melting of raw materials is achieved. Moreover, the $B_2O_3$ content in this range increases the water resistance of the glass. The lower limit of the $B_2O_3$ content is preferably 15 mass% or more, more preferably 20 mass% or more, even more preferably 24 mass% or more, particularly preferably 25 mass% or more, and most preferably more than 26 mass%. The upper limit of the $B_2O_3$ content is preferably 35 mass% or less, more preferably 32 mass% or less, even more preferably 30 mass% or less, particularly preferably 29 mass% or less, and may be 28 mass% or less. The $B_2O_3$ content may be, in some cases, 29 mass% or more.

($Al_2O_3$)

Aluminum oxide ($Al_2O_3$) is a component that forms the glass network. Moreover, $Al_2O_3$ is also a component that adjusts the devitrification temperature and the viscosity during glass forming and improves the water resistance of the glass. Furthermore, $Al_2O_3$ is a component that adjusts the permittivity of the glass. When the $Al_2O_3$ content is 0.1 mass% or more and 20 mass% or less, not only an increase in the devitrification temperature of the glass is reduced, but the water resistance of the glass increases. Moreover, the melting point of the glass is not excessively high, so that more uniform melting of raw materials is achieved. The lower limit of the $Al_2O_3$ content is preferably 1 mass% or more, more preferably 5 mass% or more, even more preferably 8 mass% or more, particularly preferably 10 mass% or more, and most preferably 12 mass% or more. The upper limit of the $Al_2O_3$ content is preferably 18 mass% or less, more preferably 16 mass% or less, even more preferably 15 mass% or less, and may be 14 mass% or less, or even 13 mass% or less.

(MgO, CaO)

Magnesium oxide (MgO) and calcium oxide (CaO) are components that adjust the devitrification temperature and the viscosity during glass forming while maintaining the thermal resistance of the glass. Moreover, MgO and CaO are components that improve the water resistance of the glass. Furthermore, MgO and CaO are components that adjust the permittivity of the glass.

A sum of the MgO content and the CaO content (expressed as (MgO + CaO) hereinafter) is a key parameter when the permittivity and the water resistance of the glass composition are given priority. MgO and CaO are components that adjust the permittivity and the water resistance of the glass. When (MgO + CaO) is 0.1 mass% or more and 10 mass% or less, not only an increase in the devitrification temperature of the glass is reduced, but a melting point of the glass is avoided to become excessively high, and thus more uniform melting of raw materials is achieved. Moreover, (MgO + CaO) in this range increases the water resistance of the glass. The lower limit of (MgO + CaO) is preferably 1 mass% or more, more preferably 1.5 mass% or more, even more preferably 2 mass% or more, particularly preferably 2.5 mass% or more, and most preferably 3 mass% or more. The upper limit of (MgO + CaO) is preferably 8 mass% or less, and may be 7 mass% or less, 6 mass% or less, less than 5 mass%, or even 4.5 mass% or less.

Although addition of MgO and addition of CaO can exert about the same effect, addition of MgO is more advantageous than addition of CaO in terms of further reducing the permittivity. Addition of MgO is more advantageous than addition of CaO also in terms of further increasing the water resistance. However, in the case of a low-permittivity glass fiber, addition of CaO can be more advantageous than addition of MgO in terms of reducing occurrence of phase separation in the glass. Occurrence of phase separation in the glass can impair homogeneity of the glass and can also make glass fiber spinning difficult. When this point should be given priority, it is preferable that MgO and CaO be added to satisfy $0 \leq MgO/(MgO + CaO) \leq 0.50$, even $0 \leq MgO/(MgO + CaO) \leq 0.25$, particularly $0 \leq MgO/(MgO + CaO) < 0.21$, or, in some cases, $0 \leq MgO/(MgO + CaO) \leq 0.2$ on a mass basis.

MgO is a component that adjusts the devitrification temperature and the viscosity during glass forming while maintaining the thermal resistance of the glass. Moreover, MgO is a component that improves the water resistance of the glass. Furthermore, MgO is a component that adjusts the permittivity of the glass. Additionally, MgO is a component that reduces phase separation in the glass. Meanwhile, excessive inclusion of MgO increases the permittivity of the glass. Therefore, the lower limit of the MgO content can be 0.1 mass% or more, 0.5 mass% or more, 1 mass% or more, 1.5 mass% or more, 2 mass% or more, or 2.5 mass% or more. The upper limit of the MgO content can be 10 mass% or less, 8 mass% or less, 6 mass% or less, less than 5 mass%, 4.5 mass% or less, 4 mass% or less, or even 3 mass% or less.

CaO is a component that adjusts the devitrification temperature and the viscosity during glass forming while maintaining the thermal resistance of the glass. Moreover, CaO is a component that improves the water resistance of the glass. Furthermore, CaO is a component that adjusts the permittivity of the glass. Additionally, CaO is a component that reduces phase separation in the glass. Meanwhile, excessive inclusion of CaO increases the permittivity of the glass. Therefore, the lower limit of the CaO content can be 0.1 mass% or more, 0.5 mass% or more, 1 mass% or more, 2 mass% or more, 3 mass% or more, or 4 mass% or more. The upper limit of the CaO content can be 10 mass% or less, 8 mass% or less, 6 mass% or less, or even less than 5 mass%. When adjustment of the permittivity of the glass composition is given high priority, the upper limit of the CaO content may be less than 4 mass%, less than 2 mass%, or even less than 1 mass%.

(SrO)

The glass composition can further include strontium oxide (SrO). SrO is a component that adjusts the devitrification temperature and the viscosity during glass forming. SrO is also a component that reduces phase separation in the glass. Meanwhile, excessive inclusion of SrO increases the permittivity of the glass. Therefore, the upper limit of the SrO content can be 5 mass% or less, 3 mass% or less, 2 mass% or less, 1 mass% or less, 0.5 mass% or less, or even less than 0.1 mass%. The glass composition may be substantially free of SrO. However, in a particular embodiment, especially where the MgO content is 1 mass% or less, contrary to expectations, inclusion of SrO in an appropriate amount surprisingly decreases the permittivity. This effect is noticeable when the SrO content is 1 mass% or more, or 2 mass% or more.

(BaO)

The glass composition can further include barium oxide (BaO). BaO is a component that adjusts the devitrification temperature and the viscosity during glass forming. Additionally, BaO is a component that reduces phase separation in the glass. Meanwhile, excessive inclusion of BaO increases the permittivity of the glass. Therefore, the upper limit of the BaO content can be 5 mass% or less, 2 mass% or less, 1 mass% or less, 0.5 mass% or less, or even less than 0.1 mass%. The glass composition may be substantially free of BaO. When uniform melting of the glass raw materials and stable manufacture of the glass composition are given high priority, the lower limit of the BaO content may be 0.05 mass% or more, 0.1 mass% or more, for example, 0.1 mass% or more and less than 1 mass%, or even 0.2 mass% or more and less than 1 mass%.

(ZnO)

The glass composition can further include zinc oxide (ZnO). ZnO is a component that adjusts the devitrification temperature and the viscosity during glass forming. Additionally, ZnO is a component that adjusts the permittivity of the glass. Meanwhile, excessive inclusion of ZnO increases the permittivity of the glass. Therefore, the upper limit of the ZnO content can be 5 mass% or less, 2 mass% or less, 1 mass% or less, 0.5 mass% or less, or even less than 0.1 mass%. The glass composition may be substantially free of ZnO.

($Li_2O$, $Na_2O$, $K_2O$)

Alkali metal oxides ($Li_2O$, $Na_2O$, and $K_2O$) are components that adjust the devitrification temperature and the viscosity during glass forming while maintaining the thermal resistance of the glass.

$Li_2O$ is a component that adjusts the devitrification temperature and the viscosity during glass forming. Meanwhile, excessive inclusion of $Li_2O$ increases the permittivity of the glass. Additionally, excessive inclusion of $Li_2O$ decreases the water resistance of the glass. Therefore, the lower limit of the $Li_2O$ content can be 0.1 mass% or more, 0.2 mass% or more, 0.3 mass% or more, 0.4 mass% or more, or even 0.5 mass% or more. The upper limit of the $Li_2O$ content can be 5 mass% or less, 4 mass% or less, 3 mass% or less, 2 mass% or less, 1.5 mass% or less, or even 1 mass% or less.

$Na_2O$ is a component that adjusts the devitrification temperature and the viscosity during glass forming. Meanwhile, excessive inclusion of $Na_2O$ increases the permittivity of the glass. Additionally, excessive inclusion of $Na_2O$ decreases the water resistance of the glass. Therefore, the upper limit of the $Na_2O$ content can be 4 mass% or less, 2 mass% or less, 1.5 mass% or less, 1 mass% or less, 0.5 mass% or less, or even 0.2 mass% or less.

$K_2O$ is a component that adjusts the devitrification temperature and the viscosity during glass forming. Meanwhile, excessive inclusion of $K_2O$ increases the permittivity of the glass. Additionally, excessive inclusion of $K_2O$ decreases the water resistance of the glass. Therefore, the upper limit of the $K_2O$ content can be 4 mass% or less, 2 mass% or less, 1 mass% or less, 0.5 mass% or less, 0.2 mass% or less, or even less than 0.1 mass%. The glass composition may be substantially free of $K_2O$.

The lower limit of a sum of contents of the alkali metal oxides (expressed as ($Li_2O + Na_2O + K_2O$) hereinafter) can be 0.1 mass% or more, 0.2 mass% or more, 0.3 mass% or more, 0.4 mass% or more, or even 0.5 mass% or more. The upper limit of ($Li_2O + Na_2O + K_2O$) can be 5 mass% or less, 4 mass% or less, 3 mass% or less, 2 mass% or less, 1.5 mass% or less, or even 1 mass% or less. The glass composition may be substantially free of the alkali metal oxides ($Li_2O + Na_2O + K_2O$). When uniform melting of the glass raw materials and stable manufacture of the glass composition are given high priority, ($Li_2O + Na_2O + K_2O$) may be 1 mass% or more.

The lower limit of $Li_2O/(Li_2O + Na_2O)$, a ratio between the alkali metal oxide contents in mass%, can be 0.01 or more, 0.02 or more, or 0.05 or more. The upper limit of $Li_2O/(Li_2O + Na_2O)$ can be 0.9 or less, 0.8 or less, or 0.6 or less. This ratio in any of these ranges significantly decreases a working temperature and facilitates the workability, facility design, etc. Such an effect may appear to be well known as the mixed alkali effect; however, the well-known mixed alkali effect has been applied to a case where the alkali metal oxide content is, for example, more than 10 mass%, and exertion of the mixed alkali effect in a case where the alkali metal oxide content is 5 mass% or less has not been acknowledged. It is worth noting that the mixed alkali effect in a case of such a low alkali content is remarkably exerted, in particular, only by changing the ratio from 0 to 0.01.

($TiO_2$)

The glass composition can further include titanium oxide ($TiO_2$). $TiO_2$ is a component that improves the meltability and the chemical durability of the glass and improves the ultraviolet absorption property of the glass. Meanwhile, excessive inclusion of $TiO_2$ increases the permittivity of the glass. The lower limit of the $TiO_2$ content can be 0.1 mass% or more. The upper limit of the $TiO_2$ content can be 5 mass% or less, 2 mass% or less, less than 1 mass%, less than 0.5 mass%, or 0.2 mass% or less. When the $TiO_2$ content is below these upper limits, an increase in devitrification temperature due to the inclusion of $TiO_2$ can be reduced. The upper limit of the $TiO_2$ content may be less than 0.1 mass%. The glass composition may be substantially free of $TiO_2$.

($ZrO_2$)

The glass composition can further include zirconium oxide ($ZrO_2$). $ZrO_2$ is a component that adjusts the devitrification temperature and the viscosity during glass forming. Meanwhile, excessive inclusion of $ZrO_2$ increases the permittivity of the glass. The upper limit of the $ZrO_2$ content can be 5 mass% or less, 2 mass% or less, less than 1 mass%, less than 0.5 mass%, 0.2 mass% or less, or even less than 0.1 mass%. When the $ZrO_2$ content is below these upper limits, an increase in devitrification temperature due to the inclusion of $ZrO_2$ to such a degree that manufacture of the glass composition is affected can be reduced. The glass composition may be substantially free of $ZrO_2$.

($T\text{-}Fe_2O_3$)

The glass composition can further include iron oxide. Iron (Fe) included in the glass composition is commonly present in the form of $Fe^{2+}$ or $Fe^{3+}$. $Fe^{3+}$ is a component that enhances the ultraviolet absorption property of the glass composition, and $Fe^{2+}$ is a component that enhances the heat absorption property of the glass composition. Fe can be introduced in some cases not intentionally but inevitably from an industrial raw material. Coloring of the glass composition may be prevented if the content of Fe is small. The upper limit of the Fe content, as expressed by $T\text{-}Fe_2O_3$ ($T\text{-}Fe_2O_3$ represents total iron oxide calculated as $Fe_2O_3$), can be 5 mass% or less, 2 mass% or less, less than 1 mass%, less than 0.5 mass%, or even 0.2 mass% or less. $T\text{-}Fe_2O_3$ may be 0.1 mass% or more. $T\text{-}Fe_2O_3$ can reinforce the refining effect of $T\text{-}SnO_2$ depending on the glass composition. Specifically, the glass composition in which $T\text{-}Fe_2O_3$ is 0.1 mass% or more; for example, 0.1 mass% or more and 1 mass% or less, and $0 \leq MgO/(MgO + CaO) \leq 0.2$ or even $0 \leq MgO/(MgO + CaO) \leq 0.15$ is satisfied is particularly suitable for stable manufacture. The $T\text{-}SnO_2$ content in this particularly suitable glass composition may be 0.15 mass% or more, or even 0.2 mass% or more. Even when the $T\text{-}SnO_2$ content is, for example, less than 0.5 mass%, stable manufacture can be achieved owing to the reinforcing effect of $T\text{-}Fe_2O_3$.

($T\text{-}SnO_2$)

The glass composition of the present embodiment includes tin oxide. Sn in the glass is commonly present in the form of $Sn^{2+}$ and/or $Sn^{4+}$. $SnO_2$ is a component that defoams the raw glass. Moreover, $SnO_2$ is a component that improves the water resistance of the glass. Furthermore, Sn in the glass is a component that emits light by ultraviolet irradiation. As for tin oxide in the glass composition, the $T\text{-}SnO_2$ (which represents total tin oxide calculated as $SnO_2$) content is in the range of 0.1 mass% or more and 2 mass% or less. If the $T\text{-}SnO_2$ content is less than 0.1 mass%, a sufficient refining effect of tin oxide on the glass composition cannot be achieved. If the $T\text{-}SnO_2$ content is more than 2 mass%, the devitrification temperature of the glass composition increases or the glass is likely to undergo phase separation.

The lower limit of the $T\text{-}SnO_2$ content is preferably 0.1 mass% or more, and may be 0.2 mass% or more, 0.22 mass% or more, 0.25 mass% or more, 0.3 mass% or more, 0.35 mass% or more, 0.4 mass% or more, or even 0.5 mass% or more. The lower limit of the $T\text{-}SnO_2$ content may be 0.6 mass% or more, even 0.65 mass% or more, or, in some cases, 0.8 mass% or more. The upper limit of the $T\text{-}SnO_2$ content is preferably 1.8 mass% or less, more preferably 1.6 mass% or less, even more preferably 1.4 mass% or less, 1.3 mass% or less, or less than 1.2 mass%, particularly preferably 1.0 mass% or less, or 0.8 mass% or less, and most preferably 0.5 mass% or less, or 0.3 mass% or less.

In an example of the glass composition suitable for stable manufacture of a low-permittivity glass fiber, the $T\text{-}SnO_2$ content is 0.5 mass% or more and $0 \leq MgO/(MgO + CaO) \leq 0.2$ is satisfied. The glass composition of this example

may include T-Fe$_2$O$_3$ in the above range, or may be substantially free of T-Fe$_2$O$_3$. The glass composition of this example may include the later-described CeO$_3$ in the later-described range, or may be substantially free of CeO$_3$.

In another example of the glass composition suitable for stable manufacture of a low-permittivity glass fiber, the T-SnO$_2$ content is 0.3 mass% or more, or even 0.4 mass% or more, and the glass composition is substantially free of MgO. The glass composition of this example may also include T-Fe$_2$O$_3$ in the above range, or may be substantially free of T-Fe$_2$O$_3$. The glass composition of this example may also include the later-described CeO$_3$ in the later-described range, or may be substantially free of CeO$_3$.

In yet another example of the glass composition suitable for stable manufacture of a low-permittivity glass fiber, the T-SnO$_2$ content is 0.6 mass% or more, even 0.65 mass% or more, particularly 0.7 mass% or more, or, in some cases, 0.8 mass% or more, and (Li$_2$O + Na$_2$O + K$_2$O) may be in the range of 0.3 mass% or more, or even 0.35 mass% or more. The glass composition of this example may also include T-Fe$_2$O$_3$ in the above range, or may be substantially free of T-Fe$_2$O$_3$. The glass composition of this example may also include the later-described CeO$_3$ in the later-described range, or may be substantially free of CeO$_3$.

It is preferable that a temperature difference ΔT, described later, be large for stable manufacture of a low-permittivity glass fiber. In an example of the glass composition suitable for ensuring a large temperature difference ΔT, the following ranges on a mass basis are satisfied.

$$0.1 \leq \text{T-SnO}_2 \leq 0.5$$

$$0.1 \leq (\text{T-Fe}_2\text{O}_3 + \text{T-SnO}_2) \leq 0.6$$

$$0.1 \leq (\text{Li}_2\text{O} + \text{Na}_2\text{O} + \text{K}_2\text{O}) \leq 1$$

The glass composition satisfying the above ranges is suitable for achieving properties which are, for example, a permittivity of 5.0 or less, or even 4.8 or less at a frequency of 1 GHz and a temperature difference ΔT of 100°C or more, or even 140°C or more.

A component not mentioned in the above ranges also affect the temperature difference ΔT. However, as long as the above three ranges are satisfied, both a low permittivity and a high temperature difference ΔT can be achieved at the same time even in the case where a component that is undesirable in terms of a low permittivity is included, such as a case where the fourth range shown below is satisfied together with the above three ranges.

$$0.1 \leq (\text{SrO} + \text{BaO}) \leq 5$$

(CeO$_2$)

The glass composition can further include cerium oxide (CeO$_2$). CeO$_2$ is a component for refining. Coloring of the glass composition may be prevented if the content of CeO$_2$ is small. Therefore, the lower limit of the CeO$_2$ content can be 0.1 mass% or more. The upper limit of the CeO$_2$ content can be 5 mass% or less, 2 mass% or less, 1 mass% or less, or less than 0.5 mass%. The upper limit of the CeO$_2$ content may be less than 0.1 mass%. The glass composition may be substantially free of CeO$_2$.

(F$_2$, Cl$_2$)

The glass composition can further include fluorine and/or chlorine. Fluorine and chlorine may be included in the form of molecules (respectively, F$_2$ and Cl$_2$), or may be included in the form of anions (respectively, F$^-$ and Cl$^-$). Herein, fluorine and chlorine included in the form of molecules or anions may be collectively referred to as F$_2$ and Cl$_2$, respectively. Additionally, the contents of these are expressed as mass percentages of these calculated as molecules Fluorine (F$_2$) is prone to evaporation and thus can be lost into an atmosphere during melting and is also difficult to control its amount in the glass. The upper limit of the F$_2$ content can be 5 mass% or less, 2 mass% or less, 1 mass% or less, 0.5 mass% or less, 0.2 mass% or less, or even less than 0.1 mass%. The glass composition may be substantially free of F$_2$. Chlorine (Cl$_2$) is prone to evaporation and thus can be lost into an atmosphere during melting and is also difficult to control its amount in the glass. The upper limit of the Cl$_2$ content can be 5 mass% or less, 2 mass% or less, 1 mass% or less, 0.5 mass% or less, 0.2 mass% or less, or even less than 0.1 mass%. The glass composition may be substantially free of Cl$_2$.

(P$_2$O$_5$)

The glass composition can further include phosphorus pentoxide (P$_2$O$_5$). Phosphorus pentoxide is a component that forms the glass network, and is also a component that adjusts the devitrification temperature and the viscosity during glass forming. Moreover, P$_2$O$_5$ is a component that adjusts the permittivity of the glass. In general, when the P$_2$O$_5$ content is more than 2 mass%, erosion of a wall of a melting furnace or a regenerative furnace during melting of the glass can significantly shorten the lifetime of the furnace. The upper limit of the P$_2$O$_5$ content can be 5 mass% or less, 2 mass% or less, less than 1 mass%, less than 0.5 mass%, 0.2 mass% or less, or even less than 0.1 mass%. The glass composition may be substantially free of P$_2$O$_5$.

(Additional component)

The glass composition can include at least one selected from La$_2$O$_3$, WO$_3$, Nb$_2$O$_5$, Y$_2$O$_3$, MoO$_3$, Ta$_2$O$_5$, MnO$_2$, Cr$_2$O$_3$, CuO, and CoO as an additional component, provided that the content of each additional component is 0 mass% or more and 5 mass% or less. The acceptable content of each of these components can be less than 2 mass%, less than 1 mass%, less than 0.5 mass%, or even less than 0.1 mass%. The acceptable total content of these components can be 5 mass% or less, less than 2% mass%, less than 1 mass%, less than 0.5 mass%, or even less than 0.1 mass%. However, the glass composition may be substantially free of the above components.

The glass composition can include at least one selected from Br$_2$, I$_2$, As$_2$O$_3$, and Sb$_2$O$_3$ as an additive, provided that the content of each additive is 0 mass% or more and 1 mass% or less. The acceptable content of each of these components can be less than 0.5 mass%, less than 0.2 mass%, or even less than 0.1 mass%. The acceptable total content of these components can be 1 mass% or less, less than 0.5% mass%, less than 0.2 mass%, or even less than 0.1 mass%. However, the glass composition may be substantially free of the above components.

The glass composition can include H$_2$O, OH, H$_2$, CO$_2$, CO, He, Ne, Ar, and N$_2$, provided that the content of each component is 0 mass% or more and 0.1 mass% or less. The acceptable content of each of these components can be less than 0.05 mass%, less than 0.03 mass%, or even less than 0.01 mass%. The acceptable total content of these components can be 0.1 mass% or less, less than 0.05 mass%, less than 0.03 mass%, or even less than 0.01 mass%. However, the glass composition may be substantially free of the above components.

The glass composition may include a small amount of a noble metal element. For example, the glass composition can include at least one noble metal element such as Pt, Rh, Au, and Os, provided that the content of each noble metal element is 0 mass% or more and 0.1 mass% or less. The acceptable content of each of these components can be less than 0.1 mass%, less than 0.05 mass%, less than 0.03 mass%, or even less than 0.01 mass%. The acceptable total content of these components can be 0.1 mass% or less, less than 0.05 mass%, less than 0.03 mass%, or even less than 0.01 mass%. However, the glass composition may be substantially free of the above components.

<Properties>

Possible properties of the glass composition of the present embodiment will be described hereinafter.

(Melting properties)

A temperature at which the viscosity of a molten glass is 1000 dPa·sec (1000 poise) is called a working temperature of the glass, and is the most suitable temperature for shaping of the glass. In the case of manufacturing a glass fiber, a variation in glass fiber diameter can be reduced when the glass has a working temperature of 1100°C or higher. When the working temperature is 1450°C or lower, the fuel cost required for glass melting can be reduced, and a glass manufacturing apparatus is less likely to be thermally eroded. Accordingly, it extends a lifetime of the apparatus. The lower limit of the working temperature can be 1100°C or higher, 1150°C or higher, 1200°C or higher, 1250°C or higher, or even 1300°C or higher. The upper limit of the working temperature can be 1450°C or lower, 1420°C or lower, 1400°C or lower, 1380°C or lower, or even lower than 1350°C.

The temperature difference ΔT is determined by subtracting the devitrification temperature from the working temperature. A greater temperature difference ΔT makes devitrification less likely to occur at shaping of the glass. Consequently, a homogeneous glass can be manufactured in a high yielding percentage. Therefore, the temperature difference ΔT can be 0°C or more, 10°C or more, 20°C or more, 30°C or more, 40°C or more, 50°C or more, in some cases, 100°C or more, or even 140°C or more. Meanwhile, when the temperature difference ΔT is 500°C or less, the glass composition can be easily adjusted. The temperature difference ΔT can be 500°C or less, 400°C or less, 300°C or less, or even 200°C or less.

(Permittivity)

The glass composition of the present embodiment can have a low permittivity. The glass composition has a permittivity of 5.5 or less, 5.2 or less, 5.0 or less, 4.9 or less, 4.8 or less, 4.7 or less, 4.6 or less, even 4.5 or less, or, in some cases, 4.4 or less at a measurement frequency of 1 GHz. The term "permittivity" refers to "relative permittivity" (also known as "dielectric constant") in a strict sense. Herein, "relative permittivity" is expressed simply as "permittivity", as is conventional. The permittivity is determined at room temperature (25°C).

[Glass fiber, etc.]

<Glass fiber>

A glass fiber of the present embodiment is formed of the above-described glass composition. According to the present embodiment, occurrence of devitrification and entrapment of bubbles in the glass fiber can be reduced further even when the glass fiber has a small fiber diameter. The glass fiber of the present embodiment can therefore be a glass fiber having a small fiber diameter.

The glass fiber has an average fiber diameter of, for example, 1 to 6 $\mu$m. The average fiber diameter may be 3 $\mu$m or more, 4.6 $\mu$m or less, or even 4.3 $\mu$m or less. The glass composition having an appropriate characteristics temperature for mass production is suitable for stable manufacture of a thin glass fiber. In a preferred embodiment, the average fiber diameter is even smaller, for example, 3.9 $\mu$m or less, or even 3.5 $\mu$m or less. The glass fiber is, for example, a long glass fiber (filament).

Preferred applications of the glass fiber of the present embodiment include printed boards. The glass fiber having a low permittivity and a small fiber diameter is suitable for use in printed boards. However, the applications of the glass fiber are not limited to printed boards.

The glass fiber can be formed into a glass yarn. A glass yarn of the present embodiment can include a glass fiber other than the glass fiber of the present embodiment, but may also be formed only of the glass fiber of the present embodiment, specifically that in the form of a long glass fiber. For this glass yarn, occurrence of defects such as fiber breakage and fuzzing of the glass fiber is reduced. Consequently, the productivity of the glass fiber is high.

The number of long glass fibers (the number of filaments) included in the glass yarn is, for example, 30 to 200. In the case of use in printed boards, it is recommended that the number of filaments be, for example, 30 to 100, 30 to 70, or even 30 to 60. An appropriate number of filaments makes formation of a glass cloth easier and more reliable, and is advantageous in terms of reduction in thickness of a printed board. However, the configuration and applications of the glass yarn are not limited to these examples.

The count of the glass yarn including the glass fiber may be 1 to 6 tex, or even 1 to 3 tex. An appropriate count makes formation of a thin glass cloth easier and more reliable, and is advantageous in terms of reduction in thickness of a printed board.

The strength of the glass yarn may be 0.4 N/tex or more, even 0.6 N/tex or more, or particularly 0.7 N/tex or more.

The glass fiber of the present embodiment can be manufactured by applying a known method. For example, the following method can be employed to manufacture a glass fiber having an average fiber diameter of about 1 to 6 $\mu$m. Specifically, the glass composition is put in a glass melting furnace and molten to be a molten glass, and then the molten glass is drawn through a large number of spinning nozzles provided at the bottom of a thermal resistant bushing of a spinning furnace to be shaped into a thread. By doing this, the glass fiber can be manufactured. The glass fiber can be a long glass fiber (filament). The melting temperature in a melting furnace is, for example, 1300 to 1700°C, preferably 1400 to 1700°C, and more preferably 1500 to 1700°C. In these cases, even when the glass fiber to be formed has a small fiber diameter, occurrence of slight devitrification and entrapment of bubbles in the glass fiber can be reduced along with an excessive increase in spinning tension being prevented. Consequently, properties (such as strength) and the quality of the resulting glass fiber can be reliably secured.

Possible approaches to manufacture a glass fiber having a small fiber diameter are to increase the drawing rate of the molten glass from the spinning furnace and to decrease the temperature of the spinning nozzles. However, the former approach may fail to secure a sufficient time for facilitating defoaming of the molten glass in the spinning furnace. Consequently, fiber breakage during spinning, a decrease in fiber strength, etc. can occur due to entrapment of bubbles. Additionally, the increase in drawing rate entails an increase in tension (spinning tension) acting on the fiber during spinning, and this increased tension may also lead to fiber breakage during spinning, a decrease in fiber strength, degradation in fiber quality, etc. A rotary winding device called a collet is commonly used for winding a glass fiber. An excessive increase in spinning tension causes the wound glass fiber to have kinks attributable to recesses between fingers, and these kinks degrade the quality of the glass fiber. Note that a collet is a device provided with a plurality of fingers arranged on the outer periphery of its main body. The fingers move outwardly in the radial direction of the collet during rotation of the collet, and sink into the main body of the collet when the collet is at rest. The quality degradation of the glass fiber may lead to, for example, poor appearance and/or tow spreading failure of a glass cloth. The latter approach, on the other hand, also needs a decrease of the melting temperature in the melting furnace. Decreasing the melting temperature in the melting furnace makes the melting temperature closer to the devitrification temperature of the glass composition, which can result in too high a viscosity of the molten glass to perform sufficient defoaming. The spinning tension increases with the increase in viscosity, and that can cause the above problems.

It is possible to make the above problems less severe by melting the glass composition of the present embodiment in the above temperature ranges. As the quality of the glass fiber improves, the appearance and/or tow spreading performance of a glass cloth formed of the glass fiber is also improved.

A glass strand can be formed by applying a sizing agent to surfaces of glass fibers formed by spinning and bundling a plurality of such glass fibers (for example, 10 to 120 glass fibers) together. This strand includes the glass fiber of the present embodiment. A glass yarn can be formed by winding the glass strand around a tube (for example, a paper tube) on a collet rotating at a high speed to form a cake, then unwinding the strand from the outer layer of the cake, twisting the strand under air drying, winding the strand around, for example, a bobbin, and further twisting the strand.

[Glass cloth]

A glass cloth of the present embodiment is formed of the above-described glass fiber. The glass cloth of the present embodiment can also have the above properties, such as a low permittivity, of the glass composition of the present embodiment. The weave of the glass cloth of the present embodiment is, for example, plain weave, satin weave, twill weave, mat weave, or rib weave, and is preferably plain weave. However, the weave is not limited to these examples. A glass yarn can include a glass fiber other than the glass fiber of the present embodiment, but may be formed of the glass fiber of the present embodiment, specifically that in the form of a long glass fiber. For the glass cloth of the present embodiment, occurrence of defects such as fiber breakage and fuzzing of the glass fiber is reduced. Therefore, the productivity of the glass cloth is high.

In a preferred embodiment, the thickness of the glass cloth, as expressed by a thickness measured according to 7.10.1 of JIS R 3420: 2013, is 20 $\mu$m or less, 7 to 20 $\mu$m, or even 8 to 15 $\mu$m. The glass cloth in this preferred embodiment is suitable for reduction in thickness of a printed board.

In a preferred embodiment, the mass of the glass cloth, as expressed by a cloth mass measured according to 7.2 of JIS R 3420: 2013, is 20 g/m$^2$ or less, 8 to 20 g/m$^2$, or even 8 to 13 g/m$^2$. The glass cloth in this preferred embodiment is suitable for being included in a printed board with a reduced thickness.

In a preferred embodiment, the number of glass fibers per unit length (25 mm) in the glass cloth (the weave density) is, for example, 80 to 130, 80 to 110, or even 90 to 110 per 25 mm for both warp and weft. The glass cloth in this preferred embodiment is suitable for reducing its thickness, increasing the number of interlacing points between warp and weft to reduce the likelihood of bias or bowed filling of the glass cloth, and reducing formation of pinholes by impregnation with a resin.

In a preferred embodiment, the air permeability of the glass cloth is 200 cm$^3$/(cm$^2$•sec) or less, 50 to 200 cm$^3$/(cm$^2$•sec), or even 50 to 150 cm$^3$/(cm$^2$•sec). The glass cloth in this preferred embodiment is suitable for reducing its thickness and above-described formation of pinholes. In order for the glass cloth to achieve the air permeability as specified above through tow spreading, it is recommended that to obtain a glass fiber, the glass composition of the present embodiment be used, or the above melting temperature, namely, 1400°C or higher, preferably 1400 to 1650°C, be applied to glass raw materials prepared so that the glass composition of the present embodiment can be obtained.

The glass cloth of the present embodiment can be manufactured by a known method using the glass fiber of the present embodiment. In an exemplary manufacturing method, the glass yarns are subjected to warping and sizing, and the resulting glass yarns are used as warp yarns, between which additional glass yarns are inserted as weft yarns. For the weft insertion, various weaving machines such as a jet loom, a Sulzer loom, and a rapier loom can be used. Specific examples of the jet loom include an air-jet loom and a water-jet loom. However, the loom for manufacturing the glass cloth is not limited to these.

The glass cloth of the present embodiment may have undergone a tow spreading treatment. The tow spreading treatment is favorable to reduction in thickness of the glass cloth. A specific method of the tow spreading treatment is not limited to a particular one, and tow spreading by pressure of water stream, tow spreading by high-frequency vibration using, for example, water as a medium, or tow spreading by compression using, for example, rolls can be applied. Incidentally, degassed water, ion-exchanged water, deionized water, electrolyzed cation water, electrolyzed anion water, or the like can be used as the water being the medium for the tow spreading. The tow spreading treatment may be carried out simultaneously with weaving of the glass cloth or after weaving of the glass cloth. The tow spreading treatment may be carried out simultaneously with any of various treatments such as heat cleaning and surface treatment or after such a treatment.

When a substance such as a sizing agent remains on the woven glass cloth, a treatment, typically heat cleaning, for removing the substance may be additionally performed. The glass cloth having undergone the removing treatment is well impregnated with and well adhered to a matrix resin when included in a printed board. After the removing treatment or separately from the removing treatment, the woven glass cloth may be surface-treated with, for example, a silane coupling agent. The surface treatment can be performed by a known technique. Specifically, the surface treatment can be performed by impregnation of the glass cloth with the silane coupling agent, application of the silane coupling agent to the glass cloth, or spraying of the silane coupling agent on the glass cloth.

The glass cloth of the present embodiment is suitable for a printed board. When the glass cloth of the present embodiment is included in a printed board, it is possible to effectively utilize the features of the glass cloth that can be formed of a glass fiber having a low permittivity and a small fiber diameter. However, the application is not limited to a printed board.

[Prepreg]

A prepreg of the present embodiment can be formed of the glass cloth of the present embodiment. The prepreg of the present embodiment can also have the above properties, such as a low permittivity, of the glass composition of the present embodiment. The method for manufacturing the prepreg of the present embodiment is not limited to a particular one, and any known conventional manufacturing method may be employed. A resin with which the prepreg of the present embodiment is impregnated is not limited to a particular one as long as the resin is a synthetic resin that can be complexed with the glass cloth of the present embodiment. Examples of the resin include thermosetting resins, thermoplastic resins, and composite resins of these. It is desirable to use a low-permittivity resin matching with the low-permittivity glass cloth of the present embodiment.

[Printed board]

A printed board of the present embodiment can be formed of the glass cloth of the present embodiment. The printed board of the present embodiment can also have the above properties, such as a low permittivity, of the glass composition of the present embodiment. The method for manufacturing the board of the present embodiment is not limited to a particular one, and any known conventional manufacturing method may be employed. In an exemplary method, a prepreg including a resin with which the glass cloth is impregnated is manufactured, and then the resin is cured.

(Examples 1 to 21 and Comparative Examples 1 to 5)

Common glass raw materials such as silica sand were blended according to each composition shown in Tables 1 to 3 to prepare glass raw material batches for Examples and Comparative Examples. Each batch was molten by heating it to 1550 to 1600°C using an electric furnace, and was kept molten for about 4 hours until the composition became uniform. After that, part of the molten glass (glass melt) was poured onto an iron plate, and was slowly cooled to room temperature in an electric furnace. A glass composition (sheet-shaped body; glass specimen) as a bulk was obtained in this manner.

For each obtained glass composition, the relationship between viscosity and temperature was examined by a common platinum ball-drawing method, and the working temperature was determined from the examination result. The platinum ball-drawing method is a method for measuring the viscosity of molten glass by dipping a platinum ball in the molten glass, drawing the platinum ball upward at a uniform velocity, determining the relationship between the load (friction) during the upward drawing of the platinum ball and the gravity, buoyancy, etc. acting on the platinum ball, and applying the determined relationship to the Stokes' law which states the relationship between the viscosity of a fluid and the fall velocity at which a small particle settles down in the fluid.

Each glass composition crushed to a particle diameter of 1.0 to 2.8 mm was put in a platinum boat. The glass composition in the boat was left in an electric furnace with a temperature gradient (800 to 1400°C) for 2 hours. The devitrification temperature of the glass composition was determined from the maximum temperature of the electric furnace at a location where a crystal appeared. In the case where the glass turned cloudy and no crystal was able to be observed, the maximum temperature of the electric furnace at a location where cloudiness appeared was defined as the devitrification temperature. Here, the particle diameter is a value measured by sieving. It should be noted that varying temperatures at different places in the electric furnace (a temperature distribution in the electric furnace) was measured in advance, and the glass composition placed at a given place in the electric furnace was heated at the temperature measured in advance for the given place. The temperature difference ΔT is determined by subtracting the devitrification temperature from the working temperature.

The permittivity at a frequency of 1 GHz was measured using a permittivity measuring apparatus by cavity resonator perturbation. The measurement temperature was 25°C, and measurement samples were each a rectangular parallelepiped having a height of 100 mm and a square base 1.5 mm on a side.

Additionally, the number of bubbles was determined in the following manner. Common glass raw materials such as silica sand were blended to prepare glass raw material batches for Examples and Comparative Examples. In an electric furnace, 150 g of each batch was molten by heating it at 1600°C being a test temperature, and was kept molten for 2 hours until the composition became uniform. After that, part of the molten glass (glass melt) was poured onto an iron plate, and was slowly cooled to room temperature in an electric furnace. A glass specimen was obtained in this manner. The number of bubbles in this glass specimen was observed using an optical microscope, and the number of bubbles per 100 g of the glass was determined. "A" represents a glass specimen having less than 2000 bubbles in 100 g of the glass, "B" represents a glass specimen having 2000 or more and less than 5000 bubbles in 100 g of the glass, "C" represents a glass specimen having 5000 or more and less than 10000 bubbles in 100 g of the glass, and "D" represents a glass specimen having 10000 or more bubbles in 100 g of the glass.

Furthermore, whether the glass composition emits light by irradiation of the glass composition with an ultraviolet lamp having its light wavelength 254 nm, and the color of the emitted light were visually observed.

Tables 1 to 3 show results of these measurements.

[Table 1]

| Components (mass%) and properties | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| $SiO_2$ | 54.03 | 52.17 | 51.77 | 51.69 | 51.16 | 51.16 | 53.55 | 51.23 | 51.64 | 51.34 |
| $B_2O_3$ | 26.52 | 29.43 | 26.53 | 26.50 | 26.98 | 26.46 | 27.04 | 27.02 | 27.52 | 27.08 |
| $Al_2O_3$ | 13.52 | 12.63 | 13.53 | 13.51 | 13.49 | 13.49 | 13.51 | 13.51 | 13.49 | 13.53 |
| MgO | 1.20 | 1.41 | 0.91 | 0.90 | 1.37 | 0.89 | 1.17 | 1.47 | 1.40 | 1.39 |
| CaO | 3.62 | 1.90 | 6.52 | 6.44 | 5.60 | 6.43 | 3.50 | 5.55 | 4.96 | 5.68 |
| SrO | - | 1.49 | - | - | - | - | - | - | - | - |
| BaO | - | - | - | - | 0.44 | - | - | - | - | - |
| ZnO | - | - | - | - | - | - | - | - | - | 0.25 |
| $Li_2O$ | 0.32 | 0.18 | 0.18 | 0.18 | 0.18 | 0.18 | 0.32 | 0.18 | - | 0.18 |
| $Na_2O$ | 0.09 | 0.09 | 0.09 | 0.09 | 0.09 | 0.09 | 0.09 | 0.09 | 0.38 | 0.09 |
| $K_2O$ | - | - | - | - | - | - | - | - | 0.14 | - |
| $TiO_2$ | - | - | - | - | - | 0.61 | - | - | - | - |
| $T\text{-}Fe_2O_3$ | 0.24 | 0.24 | 0.24 | - | - | - | 0.24 | - | 0.24 | - |
| $T\text{-}SnO_2$ | 0.46 | 0.46 | 0.23 | 0.69 | 0.69 | 0.69 | 0.46 | 0.69 | 0.23 | 0.46 |
| $CeO_2$ | - | - | - | - | - | - | - | 0.26 | - | - |
| $F_2$ | - | - | - | - | - | - | 0.12 | - | - | - |
| Devitrification temperature [°C] | 1242 | 1289 | 1051 | 1288 | 1320 | 1285 | 1242 | 1320 | 1111 | 1109 |
| Working temperature [°C] | 1306 | 1339 | 1336 | 1337 | 1329 | 1326 | 1298 | 1343 | 1332 | 1326 |
| ΔT [°C] | 64 | 50 | 285 | 49 | 9 | 41 | 56 | 23 | 221 | 217 |
| Permittivity | 4.6 | 4.4 | 4.8 | 4.8 | 4.8 | 4.9 | 4.5 | 4.8 | 4.8 | 4.8 |
| Test temperature [°C] | 1600 | 1600 | 1600 | 1600 | 1600 | 1600 | 1600 | 1600 | 1600 | 1600 |
| Number of bubbles | C | C | A | B | B | B | C | B | C | C |
| Emission color | Bluish white | Bluish white | Bluish white | Bluish white | Bluish white | Bluish white | Bluish white | Bluish white | Bluish white | Bluish white |

[Table 2]

| Components (mass%) and properties | Ex. 11 | Ex. 12 | Ex. 13 | Ex. 14 | Ex. 15 | Ex. 16 | Ex. 17 | Ex. 18 | Ex. 19 | Ex. 20 | Ex. 21 |
|---|---|---|---|---|---|---|---|---|---|---|---|
| $SiO_2$ | 51.01 | 52.46 | 51.75 | 51.36 | 48.94 | 54.64 | 51.30 | 51.27 | 51.25 | 51.24 | 51.32 |
| $B_2O_3$ | 26.38 | 24.84 | 27.58 | 27.62 | 27.30 | 26.83 | 30.20 | 30.18 | 30.17 | 30.17 | 30.21 |
| $Al_2O_3$ | 15.00 | 15.02 | 11.97 | 12.76 | 14.92 | 12.11 | 12.40 | 12.39 | 12.39 | 12.39 | 12.40 |
| $MgO$ | 1.50 | 0.85 | 0.88 | 1.48 | - | 1.14 | 0.81 | 0.81 | 0.81 | 0.81 | 0.81 |
| $CaO$ | 5.65 | 6.14 | 6.30 | 5.56 | 8.12 | 3.17 | 2.10 | 2.10 | 2.10 | 2.10 | 2.10 |
| $SrO$ | - | - | - | - | - | - | 2.70 | 2.70 | 2.70 | 2.70 | 2.70 |
| $BaO$ | - | - | - | - | - | - | 0.10 | 0.10 | 0.10 | 0.10 | 0.10 |
| $ZnO$ | - | - | - | - | - | - | - | - | - | - | - |
| $Li_2O$ | - | 0.23 | 0.14 | 0.18 | 0.18 | 1.06 | 0.10 | 0.04 | 0.01 | 0.00 | 0.13 |
| $Na_2O$ | - | - | 0.09 | 0.09 | 0.09 | 0.10 | 0.09 | 0.21 | 0.27 | 0.30 | 0.03 |
| $K_2O$ | - | - | 0.14 | - | - | - | - | - | - | - | - |
| $TiO_2$ | - | - | - | - | - | - | - | - | - | - | - |
| $T\text{-}Fe_2O_3$ | - | - | - | - | - | 0.25 | - | - | - | - | - |
| $T\text{-}SnO_2$ | 0.46 | 0.46 | 1.15 | 0.69 | 0.45 | 0.70 | 0.20 | 0.20 | 0.20 | 0.20 | 0.20 |
| $CeO_2$ | - | - | - | 0.26 | - | - | - | - | - | - | - |
| $F_2$ | - | - | - | - | - | - | - | - | - | - | - |
| Devitrification temperature [°C] | 1313 | 1171 | 1336 | 1281 | 1020 | 1277 | 1157 | 1178 | 1177 | 1188 | 1178 |
| Working temperature [°C] | 1330 | 1325 | 1346 | 1348 | 1231 | 1284 | 1344 | 1326 | 1334 | 1365 | 1350 |
| $\Delta T$ [°C] | 17 | 154 | 10 | 67 | 211 | 7 | 187 | 148 | 157 | 177 | 172 |
| Permittivity | 4.8 | 4.8 | 4.8 | 4.8 | 5.0 | 4.6 | 4.4 | 4.4 | 4.4 | 4.4 | 4.4 |
| Test temperature [°C] | 1600 | 1600 | 1600 | 1600 | 1600 | 1600 | 1600 | 1600 | 1600 | 1600 | 1600 |
| Number of bubbles | C | C | A | C | A | B | C | B | C | C | B |
| Emission color | Bluish white | Bluish white | Bluish white | Bluish white | Bluish white | Bluish white | Bluish white | Bluish white | Bluish white | Bluish white | Bluish white |

[Table 3]

| Components (mass%) and properties | Comparative Example 1 | Comparative Example 2 | Comparative Example 3 | Comparative Example 4 | Comparative Example 5 |
|---|---|---|---|---|---|
| $SiO_2$ | 74.20 | 51.90 | 51.72 | 51.17 | 53.30 |
| $B_2O_3$ | 22.00 | 26.60 | 26.51 | 26.23 | 27.68 |
| $Al_2O_3$ | 0.30 | 13.56 | 13.51 | 13.37 | 12.79 |
| MgO | - | 0.93 | 0.91 | 0.82 | 2.16 |
| CaO | 0.50 | 6.68 | 6.59 | 5.87 | 2.66 |
| SrO | - | - | - | - | - |
| BaO | - | - | - | - | - |
| ZnO | - | - | - | - | - |
| $Li_2O$ | 0.50 | 0.14 | - | 0.18 | 0.18 |
| $Na_2O$ | 1.00 | 0.19 | 0.38 | 0.09 | 0.09 |
| $K_2O$ | 1.50 | - | 0.14 | - | - |
| $TiO_2$ | - | - | - | - | 0.61 |
| $T-Fe_2O_3$ | - | - | 0.24 | - | - |
| $T-SnO_2$ | - | - | - | 2.27 | - |
| $CeO_2$ | - | - | - | - | 0.53 |
| $F_2$ | - | - | - | - | - |
| Devitrification temperature [°C] | - | 1030 | 1040 | > 1308 | 1208 |
| Working temperature [°C] | - | 1331 | 1341 | 1308 | 1305 |
| $\Delta T$ [°C] | | 301 | 301 | < 0 | 97 |
| Permittivity | 4.1 | 4.8 | 4.9 | 4.8 | 4.5 |
| Test temperature [°C] | 1600 | 1600 | 1600 | 1600 | 1600 |
| Number of bubbles | D | D | D | A | D |
| Emission color | - | - | - | Bluish white | - |

The temperature differences $\Delta T$ (working temperature - devitrification temperature) of the glass compositions obtained in Examples 1 to 21 are 7°C to 285°C. The glass compositions obtained in Examples 1 to 21 have a permittivity of 4.4 to 5.0 at a frequency of 1 GHz. The number of bubbles in each of the glass compositions obtained in Examples 1 to 21 is A to C. For each of the glass compositions obtained in Examples 1 to 21, emission of light by ultraviolet was observed.

Meanwhile, in the glass composition obtained in Comparative Example 1, the $T-SnO_2$ content is out of the ranges of the composition ratios specified in the present invention. Because of this, the number of bubbles in the glass composition obtained in Comparative Example 1 is D, and is larger than those of the glass compositions obtained in Examples 1 to 21. Besides, for the glass composition obtained in Comparative Example 1, emission of light by ultraviolet was not observed.

In the glass composition obtained in Comparative Example 2, the $T-SnO_2$ content is out of the ranges of the composition ratios specified in the present invention. Because of this, the number of bubbles in the glass composition obtained in Comparative Example 2 is D, and is larger than those of the glass compositions obtained in Examples 1 to 21. Besides, for the glass composition obtained in Comparative Example 2, emission of light by ultraviolet was not observed.

In the glass composition obtained in Comparative Example 3, the $T-SnO_2$ content is out of the ranges of the composition ratios specified in the present invention. Because of this, the number of bubbles in the glass composition obtained in Comparative Example 3 is D, and is larger than those of the glass compositions obtained in Examples 1 to 21. Besides, for the glass composition obtained in Comparative Example 3, emission of light by ultraviolet was not observed.

In the glass composition obtained in Comparative Example 4, the $T-SnO_2$ content is out of the ranges of the composition ratios specified in the present invention. Because of this, the temperature difference ΔT of the glass composition obtained in Comparative Example 4 is less than 0°C, which is smaller than those of the glass compositions obtained in Examples 1 to 21.

In the glass composition obtained in Comparative Example 5, the T-SnO$_2$ content is out of the ranges of the composition ratios specified in the present invention. Because of this, the number of bubbles in the glass composition obtained in Comparative Example 5 is D, and is larger than those of the glass compositions obtained in Examples 1 to 21.

**Claims**

1. A glass composition comprising the following components, in mass%:

    $45 \leq SiO_2 \leq 80$;
    $10 \leq B_2O_3 \leq 40$;
    $0.1 \leq Al_2O_3 \leq 20$;
    $0.1 \leq (MgO + CaO) \leq 10$;
    $0 \leq (Li_2O + Na_2O + K_2O) \leq 5$; and
    $0.1 \leq T\text{-}SnO_2 \leq 2$, where T-SnO$_2$ represents total tin oxide calculated as SnO$_2$, wherein
    $0 \leq MgO/(MgO + CaO) \leq 0.50$ is satisfied on a mass basis.

2. The glass composition according to claim 1, wherein $45 \leq SiO_2 \leq 65$ in mass% is satisfied.

3. The glass composition according to claim 1, wherein $20 \leq B_2O_5 \leq 40$ in mass% is satisfied.

4. The glass composition according to claim 1, wherein $5 \leq Al_2O_5 \leq 20$ in mass% is satisfied.

5. The glass composition according to claim 1, wherein $0.1 \leq (MgO + CaO) < 5$ in mass% is satisfied.

6. The glass composition according to claim 1, wherein $0.1 \leq T\text{-}SnO_2 \leq 0.5$ in mass% is satisfied.

7. The glass composition according to claim 1, wherein $1 \leq SrO \leq 3$ in mass% is satisfied.

8. The glass composition according to claim 1, wherein $0.05 \leq BaO \leq 1$ in mass% is satisfied.

9. The glass composition according to claim 1, wherein $0.1 \leq (Li_2O + Na_2O + K_2O) \leq 5$ in mass% is satisfied.

10. The glass composition according to claim 1, wherein $0.1 \leq Li_2O \leq 5$ in mass% is satisfied.

11. The glass composition according to claim 1, wherein $0.01 \leq Li_2O/(Li_2O + Na_2O) \leq 0.9$ in mass% is satisfied.

12. The glass composition according to claim 1, wherein $0 \leq P_2O_5 \leq 5$ in mass% is satisfied.

13. The glass composition according to claim 1, wherein $0 \leq F_2 \leq 1$ in mass% is satisfied.

14. The glass composition according to claim 1, wherein $0.1 \leq CeO_2 \leq 5$ in mass% is satisfied.

15. The glass composition according to claim 1, wherein when a temperature at which a viscosity of the glass composition is 1000 dPa•sec is defined as a working temperature, the working temperature is 1450°C or lower.

16. The glass composition according to claim 1, wherein when a temperature at which a viscosity of the glass composition is 1000 dPa•sec is defined as a working temperature, a temperature difference ΔT determined by subtracting a devitrification temperature from the working temperature is 0°C or more.

17. The glass composition according to claim 1, having a permittivity of 5.5 or less at a frequency of 1 GHz.

18. A glass fiber formed of the glass composition according to any one of claims 1 to 17.

19. A glass fiber manufacturing method comprising:

melting the glass composition according to any one of claims 1 to 17; and
shaping the molten glass composition into a glass fiber.

<table>
<tr><td colspan="2">**INTERNATIONAL SEARCH REPORT**</td><td>International application No.<br>**PCT/JP2022/004565**</td></tr>
</table>

**A. CLASSIFICATION OF SUBJECT MATTER**

*C03C 3/091*(2006.01)i; *C03C 3/095*(2006.01)i; *C03C 3/097*(2006.01)i; *C03C 3/11*(2006.01)i; *C03C 13/00*(2006.01)i
FI: C03C3/091; C03C3/097; C03C3/095; C03C3/11; C03C13/00

According to International Patent Classification (IPC) or to both national classification and IPC

**B. FIELDS SEARCHED**

Minimum documentation searched (classification system followed by classification symbols)

C03C1/00-14/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

INTERGLAD

**C. DOCUMENTS CONSIDERED TO BE RELEVANT**

| Category* | Citation of document, with indication, where appropriate, of the relevant passages | Relevant to claim No. |
|---|---|---|
| X | JP 2012-51773 A (NIPPON ELECTRIC GLASS CO.) 15 March 2012 (2012-03-15)<br>paragraphs [0020], [0034], [0042], examples 1-17 | 1-19 |
| X | JP 2016-537289 A (CORNING INC.) 01 December 2016 (2016-12-01)<br>paragraphs [0029], [0030], [0035], [0036], examples 1-4 | 1-7, 9-17 |
| X | JP 2019-501859 A (CORNING INC.) 24 January 2019 (2019-01-24)<br>paragraphs [0050], [0058]-[0075], example 1 | 1-7, 9-17 |
| X | JP 2018-519229 A (CORNING INC.) 19 July 2018 (2018-07-19)<br>table 2, Contego | 1-6, 9, 12, 13, 15-17 |
| X | WO 2012/132328 A1 (NIPPON SHEET GLASS CO., LTD.) 04 October 2012 (2012-10-04)<br>paragraphs [0046]-[0051], examples 8, 11, 14, 17, 19, 20 | 1, 2, 4, 6-17 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 March 2022** | **05 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/004565**

| Patent document cited in search report | | | Publication date (day/month/year) | Patent family member(s) | | | Publication date (day/month/year) |
|---|---|---|---|---|---|---|---|
| JP | 2012-51773 | A | 15 March 2012 | (Family: none) | | | |
| JP | 2016-537289 | A | 01 December 2016 | US | 2015/0140299 | A1 | |
| | | | | paragraphs [0027], [0028], [0033], [0034], examples 1-4 | | | |
| | | | | WO | 2015/077109 | A1 | |
| | | | | EP | 3071531 | A1 | |
| | | | | TW | 201527250 | A | |
| | | | | KR | 10-2016-0087867 | A | |
| | | | | CN | 106414358 | A | |
| JP | 2019-501859 | A | 24 January 2019 | US | 2017/0174559 | A1 | |
| | | | | paragraphs [0059], [0067]-[0085], example 1 | | | |
| | | | | WO | 2017/112616 | A1 | |
| | | | | EP | 3393989 | A1 | |
| | | | | TW | 201731789 | A | |
| | | | | KR | 10-2018-0096723 | A | |
| | | | | CN | 108602711 | A | |
| JP | 2018-519229 | A | 19 July 2018 | US | 2018/0057390 | A1 | |
| | | | | table 2, Contego | | | |
| | | | | WO | 2016/154284 | A1 | |
| | | | | EP | 3274306 | A1 | |
| | | | | TW | 201703912 | A | |
| | | | | KR | 10-2017-0131586 | A | |
| | | | | CN | 107922237 | A | |
| WO | 2012/132328 | A1 | 04 October 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S62226839 A